# FASCICULE DE BREVET EUROPEEN

(11) **EP 2 385 598 B1**
(45) Date de publication et mention de la délivrance du brevet: **01.04.2015**
(21) Numéro de dépôt: 11164521.4
(22) Date de dépôt: 03.05.2011
(51) Int. Cl.: H02G 3/12, H02G 3/14

(54) **Appareillage électrique encastrable à étanchéité améliorée**
Einbau-Elektrogerät mit verbesserter Abdichtung
Built-in electric switchgear with improved seal

(30) Priorité: 04.05.2010 FR 1053438
(43) Date de publication de la demande: 09.11.2011
(73) Titulaire: Legrand France, 87000 Limoges (FR); Legrand SNC, 87000 Limoges (FR)
(72) Inventeur: Caille, Jean-Loup, 87510, Peyrilhac (FR); Mullier, Daniel, 87000, Limoges (FR); Buisson, Philippe, 87280, Limoges (FR); Combas, Christian, 87240, Ambazac (FR)
(74) Mandataire: Novagraaf Technologies

(56) Documents cités:
- EP-A1- 1 538 718
- EP-A2- 1 710 881
- EP-A2- 1 798 831
- DE-A1- 2 420 017
- DE-A1- 10 229 930
- DE-U1-202006 006 453

## Description

L'invention concerne, de façon générale, le domaine des appareillages électriques.

Plus précisément, l'invention concerne un appareillage électrique encastrable dans une boîte d'encastrement au moins par translation suivant un axe principal, cet appareillage comprenant, le long de cet axe principal, une plaque frontale, une platine support, un bloc fonctionnel, et une enveloppe entourant le bloc fonctionnel.

Un appareillage de ce type est décrit dans la demande japonaise de brevet JP-07-274346 A.

Un appareillage voisin est décrit dans la demande allemande de brevet DE 10 2008 015 128 A.

La présence d'une enveloppe entourant le bloc fonctionnel permet de conférer à l'appareillage, de façon connue par ces demandes de brevets antérieures, une étanchéité de cet appareillage au moins à la poussière.

En revanche, cette enveloppe impose a priori un choix entre un appareillage dépourvu d'organes de fixation, comme illustré dans la demande JP-07-274346 A, et un appareillage doté de tels organes de fixation, comme illustré dans la demande DE 10 2008 015 128 A.

La présente invention a précisément pour but de proposer un appareillage conçu pour surmonter cette limitation.

En outre, le document DE 20 2006 006 453 U décrit un appareillage électrique encastrable dans une boîte d'encastrement au moins par translation suivant un axe principal, l'appareillage comprenant, le long de cet axe principal, une plaque frontale, une platine support, un bloc fonctionnel, et une enveloppe entourant le bloc fonctionnel. L'enveloppe présente, de part et d'autre de l'axe principal, deux renfoncements s'étendant parallèlement à l'axe principal.

L'appareillage de l'invention, par ailleurs conforme à la définition générique qu'en donne le préambule ci-dessus, est essentiellement caractérisé en ce que chaque organe de fixation comprend une plaquette et des branches terminées en griffes et mobiles, dans une direction radiale, par rapport à la plaquette, et en ce que chaque plaquette est enfilée dans l'un desdits renfoncements.

De préférence, l'enveloppe est réalisée en un matériau à la fois isolant électriquement et étanche, par exemple en styrène-éthylène/butadiène-styrène.

L'invention est notamment applicable à un appareillage dont le bloc fonctionnel et la plaque frontale sont encliquetés sur la platine support.

L'appareillage de l'invention comprend par exemple, en tant qu'organes de fixation, deux assemblages mécaniques dont chacun comprend, outre ladite plaquette enfilée dans l'un desdits renfoncements, une vis montée à rotation libre dans un perçage de la plaquette, parallèlement à l'axe principal, un écrou plat engagé sur la vis et maintenu fixe en rotation et libre en translation par la plaquette, et un étrier présentant, outre lesdites branches terminées en griffes et qui sont au nombre de deux, une base inclinée par rapport aux branches, traversée par la vis et disposée entre l'écrou plat et une butée de la plaquette, le vissage de la vis par rapport à la plaquette provoquant ainsi un écartement, dans une direction radiale, des branches de l'étrier par rapport à la plaquette.

Pour optimiser sa fonction d'étanchéité, l'enveloppe peut présenter une lèvre appliquée sur la face arrière de la plaque frontale, cette lèvre étant par exemple formée par un repli sur elle-même de la paroi de l'enveloppe.

En outre, l'enveloppe est avantageusement conformée pour recouvrir le bord externe de la platine.

Dans un mode de réalisation préféré de l'invention, la platine présente, sur son bord externe, des ergots radiaux, et l'enveloppe présente, en regard des ergots radiaux de la platine, des perçages respectifs dans lesquels sont enfilés les ergots de la platine.

Néanmoins, il est également possible de prévoir que l'enveloppe soit surmoulée sur la platine.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un appareillage électrique conforme à l'invention;
- les figures 2 et 3 sont des vues en perspective d'une enveloppe utilisable dans un appareillage électrique conforme à l'invention, respectivement observée par l'arrière et par l'avant, la figure 2 illustrant en outre le passage d'un conducteur électrique à travers l'enveloppe par perçage en force de cette enveloppe;
- les figures 4 et 5 sont des vues en perspective partielle d'un appareillage électrique conforme à l'invention utilisant une enveloppe respectivement observée pendant et après le montage d'un organe de fixation;
- les figures 6 et 7 sont des vues en perspective à échelle agrandie d'un organe de fixation pouvant équiper un appareillage électrique conforme à l'invention, cet organe de fixation étant respectivement observé en configuration repliée inactive, et en position dépliée opérationnelle;
- la figure 8 est une vue en perspective partielle de l'organe de fixation illustré à la figure 7, cette vue étant obtenue par coupe axiale de l'organe de fixation de la figure 7;
- la figure 9 est une vue en coupe partielle à échelle agrandie d'un appareillage électrique conforme à l'invention; et
- la figure 10 est une vue en coupe d'un appareillage électrique conforme à l'invention, représenté dans une boîte d'encastrement elle-même installée dans le perçage d'une cloison.

Comme annoncé précédemment, l'invention concerne un appareillage électrique encastrable dans une boîte d'encastrement B, cet encastrement étant typiquement réalisé par translation suivant l'axe principal X de l'appareillage.

Cet appareillage comprend, le long de l'axe principal X, une plaque frontale 1, une platine support 2, un bloc fonctionnel 3, et une enveloppe 4.

De façon connue en soi, le bloc fonctionnel 3 et la plaque frontale 1 peuvent être rendus solidaires de la platine support 2 par encliquetage.

L'enveloppe 4, qui est de préférence réalisée en un matériau étanche et électriquement isolant tel que le styrène-éthylène/butadiène-styrène, entoure le bloc fonctionnel 3 de manière à le protéger au moins d'un ruissellement d'eau et / ou des poussières transportées par des courants d'air.

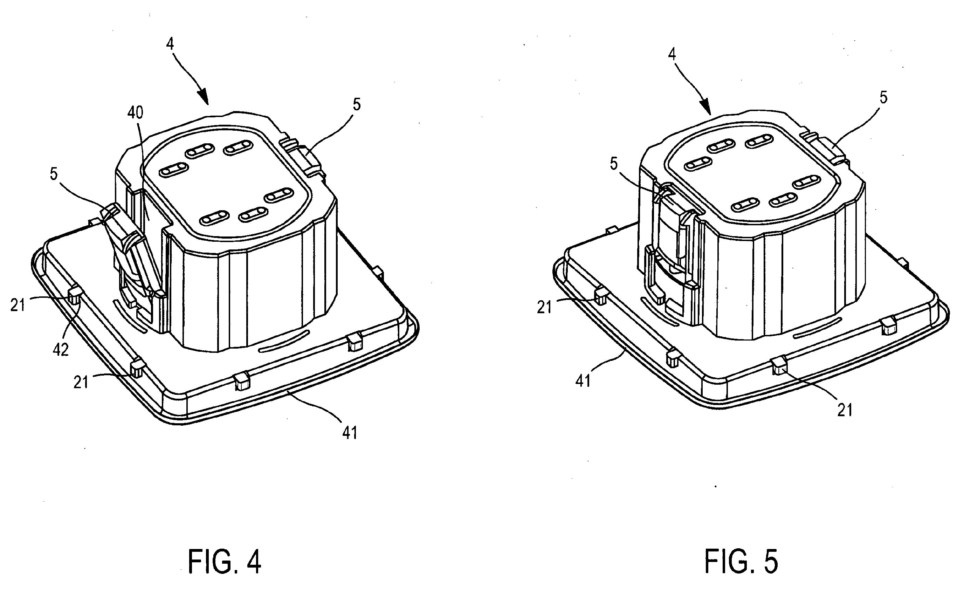

Selon l'invention, l'enveloppe 4 présente, de part et d'autre de l'axe principal X, deux renfoncements 40 qui s'étendent parallèlement à l'axe principal X et qui sont conformés pour recevoir, de façon amovible, deux organes 5 respectifs de fixation (figures 4 et 5).

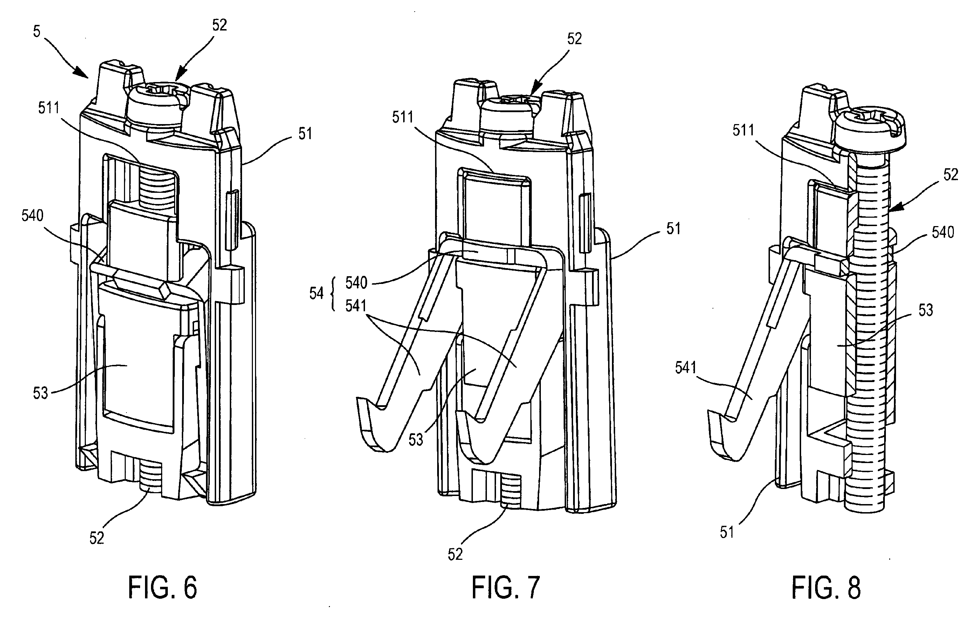

Les figures 6 à 8 illustrent de façon non limitative un mode de réalisation possible de chacun de ces organes 5 de fixation.

Dans ce mode de réalisation, chaque organe 5 de fixation est constitué d'un assemblage mécanique comprenant une plaquette 51, une vis 52, un écrou plat 53, et un étrier 54.

La plaquette 51 présente une forme et des dimensions qui lui permettent d'être enfilée dans l'un des renfoncements 40 de l'enveloppe 4, la plus grande dimension, ou longueur, de cette plaquette étant au moins sensiblement parallèle à l'axe principal X lorsque cette plaquette est en place dans un renfoncement 40 de l'enveloppe.

La vis 52 est montée à rotation libre dans un perçage de la plaquette 51 et s'étend parallèlement à l'axe principal X, c'est-à-dire suivant la longueur de la plaquette 51.

L'écrou plat 53, qui est engagé sur la vis 52, est maintenu fixe en rotation et libre en translation par la plaquette 51.

L'étrier 54 présente deux branches 541 qui sont terminées en griffes, et une base 540 qui est inclinée par rapport aux branches 541.

La base 540 de l'étrier 54 est traversée par la vis 52 et disposée entre l'écrou plat 53 et une butée 511 de la plaquette 51.

Grâce à cet agencement, le vissage de la vis 52 par rapport à la plaquette 51 provoque l'écartement, dans une direction radiale c'est-à-dire perpendiculaire à l'axe principal X, des branches 541 de l'étrier 54 par rapport à la plaquette 51.

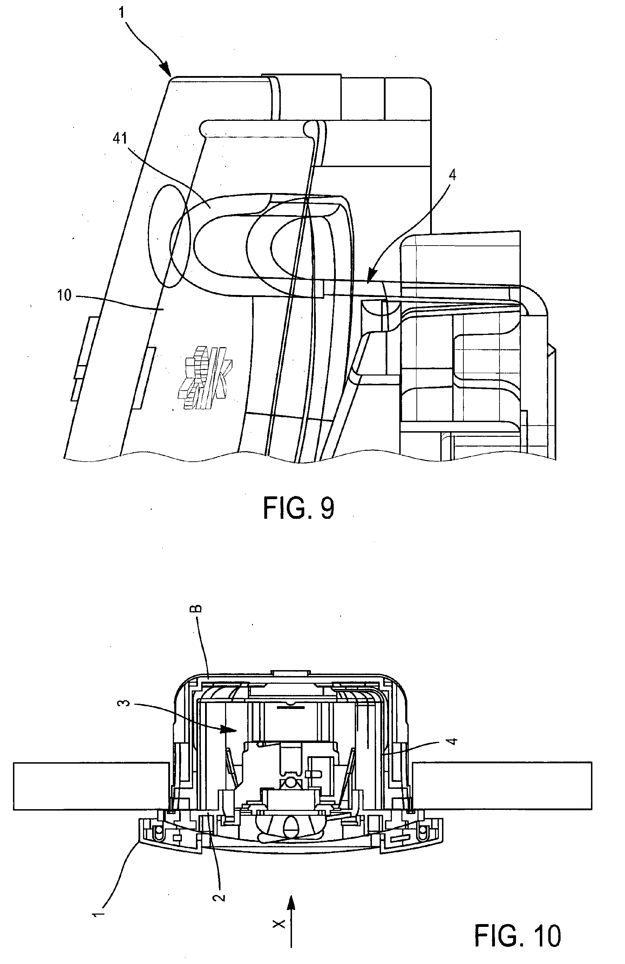

Comme le montre le mieux la figure 9, l'enveloppe 4 présente une lèvre 41 qui est appliquée sur la face arrière 10 de la plaque frontale 1, cette figure 9 représentant de façon symbolique la position qu'occuperait la lèvre 41 en l'absence de plaque frontale.

Comme le montre encore cette figure, la lèvre 41 de l'enveloppe 4 est de préférence formée par un repli de la paroi de l'enveloppe 4 sur elle-même.

Comme le montre la figure 10, l'enveloppe 4 recouvre avantageusement le bord externe 20 de la platine 2.

La fixation de l'enveloppe sur la platine peut, dans un mode de réalisation non illustré, être obtenue en surmoulant cette enveloppe 4 sur la platine 2.

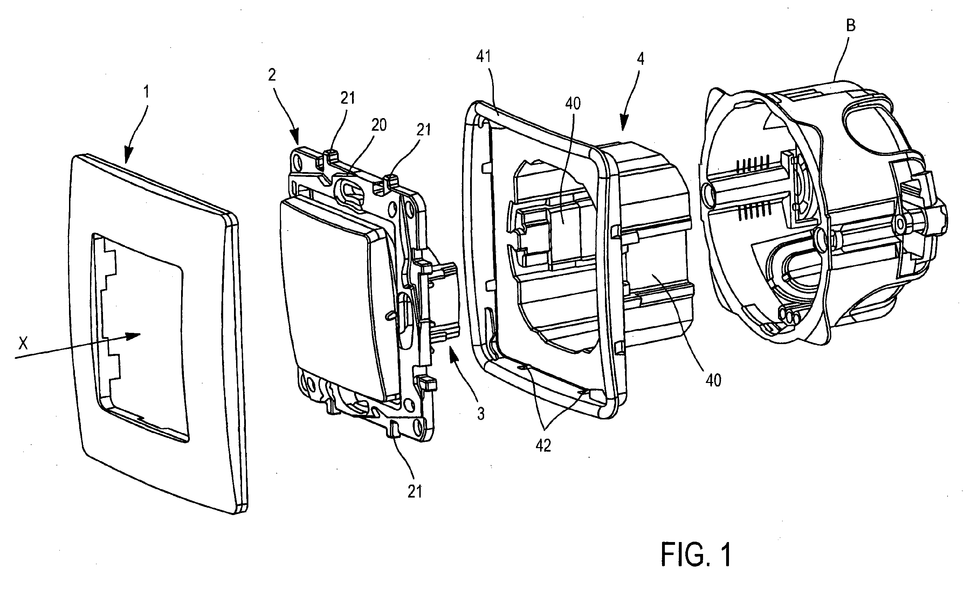

Dans le mode de réalisation illustré, la platine 2 présente, sur son bord externe 20, des ergots radiaux 21 notamment visibles sur les figures 1, 4, et 5.

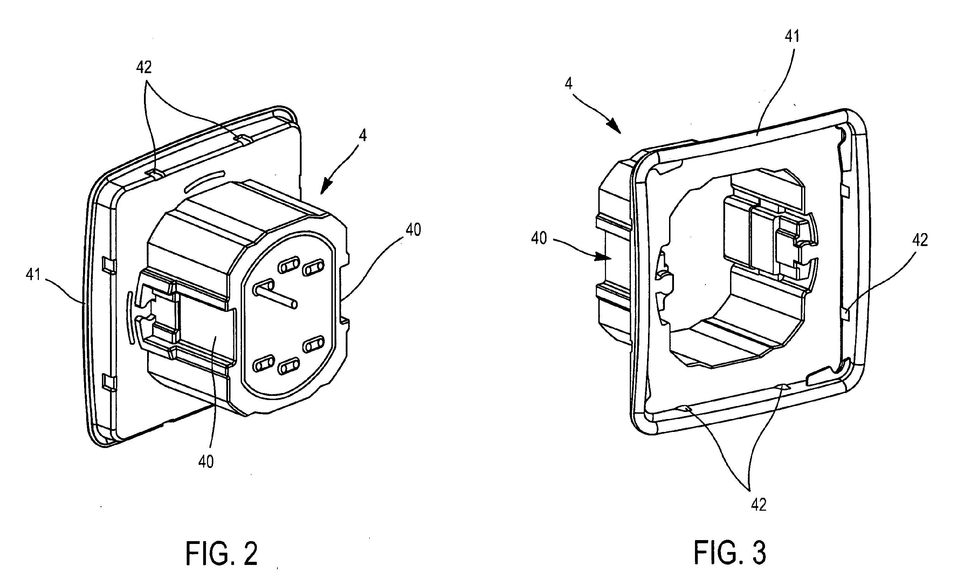

Par ailleurs, l'enveloppe 4 présente, sur sa périphérie, des perçages 42 notamment visibles sur les figures 2 à 5.

Les perçages 42 de l'enveloppe 4 sont respectivement formés en regard des ergots radiaux 21 de la platine 2, de sorte que la fixation de l'enveloppe sur la platine peut être obtenue en enfilant les ergots 21 de la platine 2 dans les perçages respectifs 42 de l'enveloppe 4.

## Revendications

1. Appareillage électrique encastrable dans une boîte d'encastrement (B) au moins par translation suivant un axe principal (X), cet appareillage comprenant, le long de cet axe principal (X), une plaque frontale (1), une platine support (2), un bloc fonctionnel (3), et une enveloppe (4) entourant le bloc fonctionnel (3), l'enveloppe (4) présentant, de part et d'autre de l'axe principal (X), deux renfoncements (40) s'étendant parallèlement à l'axe principal (X) et conformés pour recevoir, de façon amovible, deux organes (5) respectifs de fixation, **caractérisé en ce que** chaque organe de fixation (5) comprend une plaquette (51) et des branches (541) terminées en griffes et mobiles, dans une direction radiale, par rapport à la plaquette (51), et **en ce que** chaque plaquette (51) est enfilée dans l'un desdits renfoncements (40).

2. Appareillage suivant la revendication 1, **caractérisé en ce que** l'enveloppe (4) est réalisée en un matériau isolant et étanche.

3. Appareillage suivant l'une quelconque des revendications précédentes, **caractérisé en ce que** le bloc fonctionnel (3) et la plaque frontale (1) sont encliquetés sur la platine support (2).

4. Appareillage suivant l'une quelconque des revendications précédentes, **caractérisé en ce qu'**il comprend, en tant qu'organes de fixation (5), deux assemblages mécaniques dont chacun comprend, outre ladite plaquette (51) enfilée dans l'un desdits renfoncements (40), une vis (52) montée à rotation libre dans un perçage de la plaquette (51), parallèlement à l'axe principal (X), un écrou plat (53) engagé sur la vis (52) et maintenu fixe en rotation et libre en translation par la plaquette (51), et un étrier (54) présentant, outre lesdites branches (541) terminées en griffes et qui sont au nombre de deux, une base (540) inclinée par rapport aux branches (541), traversée par la vis (52) et disposée entre l'écrou plat (53) et une butée (511) de la plaquette (51), le vissage de la vis (52) par rapport à la plaquette (51) provoquant ainsi un écartement, dans la direction radiale, des branches (541) de l'étrier (54) par rapport à la plaquette (51).

5. Appareillage suivant l'une quelconque des revendications précédentes, **caractérisé en ce que** l'enveloppe (4) présente une lèvre (41) appliquée sur la face arrière (10) de la plaque frontale (1).

6. Appareillage suivant la revendication 5, **caractérisé en ce que** la lèvre (41) appliquée sur la face arrière (10) de la plaque frontale (1) est formée par un repli sur elle-même de la paroi de l'enveloppe (4).

7. Appareillage suivant l'une quelconque des revendications précédentes, **caractérisé en ce que** l'enveloppe (4) recouvre le bord externe (20) de la platine (2).

8. Appareillage suivant la revendication 7, **caractérisé en ce que** la platine (2) présente, sur son bord externe (20), des ergots radiaux (21), et **en ce que** l'enveloppe (4) présente, en regard des ergots radiaux (21) de la platine (2), des perçages respectifs (42) dans lesquels sont enfilés les ergots (21) de la platine (2).

9. Appareillage suivant l'une quelconque des revendications 1 à 7, **caractérisé en ce que** l'enveloppe (4) est surmoulée sur la platine (2).

10. Appareillage suivant l'une quelconque des revendications précédentes, **caractérisé en ce que** l'enveloppe (4) est réalisée en styrène-éthylène/butadiène-styrène.

## Patentansprüche

1. Elektrisches Schaltgerät, das mindestens durch Verschiebung entlang einer Hauptachse (X) in einer Unterputzsteckdose (B) eingebaut werden kann, wobei dieses Gerät entlang dieser Hauptachse (X) eine Vorderplatte (1), eine Tragplatte (2), einen Funktionsblock (3) und ein Gehäuse (4) umfasst, das den Funktionsblock (3) umgibt; wobei das Gehäuse (4) auf beiden Seiten der Hauptachse (X) zwei Verstärkungen (40) aufweist, die sich parallel zur Hauptachse (X) erstrecken und angepasst sind, um auf abnehmbare Art und Weise zwei entsprechende Befestigungsorgane (5) aufzunehmen, **dadurch gekennzeichnet, dass** jedes Befestigungsorgan (5) eine Platte (51) und Schenkel (541) aufweist, die mit Klauen enden und in eine radiale Richtung in Bezug zur Platte (51) beweglich sind, und dadurch, dass jede Platte (51) in eine der Verstärkungen (40) eingefädelt ist.

2. Gerät nach Anspruch 1, **dadurch gekennzeichnet, dass** das Gehäuse (4) aus einem isolierenden und dichten Material ausgeführt ist.

3. Gerät nach einem der vorhergehenden Ansprüche, **dadurch gekennzeichnet, dass** der Funktionsblock (3) und die Vorderplatte (1) auf der Tragplatte (2) eingerastet sind.

4. Gerät nach einem der vorhergehenden Ansprüche, **dadurch gekennzeichnet, dass** es als Befestigungsorgane (5) zwei mechanische Baugruppen umfasst, von denen jede über die in die eine der Verstärkungen (40) eingefädelte Platte (51) hinaus eine Schraube (52), die frei drehbar in einer Bohrung der Platte (51) parallel zur Hauptachse (X) gelagert ist, eine Flachmutter (53), die auf der Schraube (52) in Eingriff ist und drehfest und frei verschiebbar durch die Platte (51) gehalten wird, und einen Bügel (54) umfasst, der über die mit Klauen endenden Schenkel (541) hinaus, deren Anzahl zwei ist, eine Basis (540) aufweist, die in Bezug zu den Schenkeln (541) geneigt ist, durch die Schraube (52) durchquert wird und zwischen der Flachmutter (53) und einem Anschlag (511) der Platte (51) angeordnet ist, wobei das Schrauben der Schraube (52) in Bezug zu der Platte (51) somit ein Entfernen der Schenkel (541) des Bügels (54) in die radiale Richtung in Bezug zu der Platte (51) bewirkt.

5. Gerät nach einem der vorhergehenden Ansprüche, **dadurch gekennzeichnet, dass** das Gehäuse (4) eine Lippe (41) aufweist, die auf der hinteren Seite (10) der Vorderplatte (1) angebracht ist.

6. Gerät nach Anspruch 5, **dadurch gekennzeichnet, dass** die auf der hinteren Seite (10) der Vorderplatte (1) angebrachte Lippe (41) durch eine Faltung der Wand des Gehäuses (4) auf sich selbst gebildet ist.

7. Gerät nach einem der vorhergehenden Ansprüche, **dadurch gekennzeichnet, dass** das Gehäuse (4) den äußeren Rand (20) der Platte (2) bedeckt.

8. Gerät nach Anspruch 7, **dadurch gekennzeichnet, dass** die Platte (2) auf ihrem äußeren Rand (20) radiale Stifte (21) aufweist, und dadurch, dass das Gehäuse (4) den radialen Stiften (21) der Platte (2) gegenüberstehend entsprechende Bohrungen (42) aufweist, in die die Stifte (21) der Platte (2) eingefädelt sind.

9. Gerät nach einem der Ansprüche 1 bis 7, **dadurch gekennzeichnet, dass** das Gehäuse (4) auf der Platte (2) übergeformt ist.

10. Gerät nach einem der vorhergehenden Ansprüche, **dadurch gekennzeichnet, dass** das Gehäuse (4) aus Styrol-Ethylen/Butadien-Styrol ausgeführt ist.

## Claims

1. Electrical apparatus adapted to be flush-mounted in a mounting box (B) at least by movement in translation along a main axis (X), this apparatus including along this main axis (X) a front plate (1), a support plate (2), a functional assembly (3) and a casing (4) surrounding the functional assembly (3), the casing (4) having on respective opposite sides of the main axis (X) two recesses (40) extending parallel to the main axis (X) and conformed to receive, removably, two respective fixing members (5), **characterized in that** each fixing member (5) includes a plate (51) and branches (541) ending in claws and movable in a radial direction relative to the plate (51) and **in that** each plate (51) is threaded into one of said recesses (40).

2. Apparatus according to claim 1, **characterized in that** the casing (4) is made of an insulating and impervious material.

3. Apparatus according to either one of the preceding claims, **characterized in that** the functional assembly (3) and the front plate (1) are clipped onto the support plate (2).

4. Apparatus according to any one of the preceding claims, **characterized in that** it includes, as fixing members (5), two mechanical assemblies each of which includes in addition to said plate (51) threaded into one of said recesses (40) a screw (52) mounted to rotate freely in a bore of the plate (51) parallel to the main axis (X), a flat nut (53) engaged on the screw (52) and held fixed against rotation and free to move in translation by the plate (51) and a bracket (54) having in addition to said branches (541) ending in claws, of which there are two, a base (540) inclined relative to the branches (541) through which the screw (52) passes and disposed between the flat nut (53) and a stop (511) of the plate (51), screwing the screw (52) relative to the plate (51) thus causing radial movement of the branches (541) of the bracket (54) away from the plate (51).

5. Apparatus according to any one of the preceding claims, **characterized in that** the casing (4) has a lip (41) applied to the rear face (10) of the front plate (1).

6. Apparatus according to claim 5, **characterized in that** the lip (41) applied to the rear face (10) of the front plate (1) is formed by a fold on itself of the wall of the casing (4).

7. Apparatus according to any one of the preceding claims, **characterized in that** the casing (4) covers the outer edge (20) of the plate (2).

8. Apparatus according to claim 7, **characterized in that** the plate (2) has radial lugs (21) on its outer edge (20) and **in that** the casing (4) has respective bores (42) opposite the radial lugs (21) of the plate (2) into which the lugs (21) of the plate (2) are threaded.

9. Apparatus according to any one of claims 1 to 7, **characterized in that** the casing (4) is moulded onto the plate (2).

10. Apparatus according to any one of the preceding claims, **characterized in that** the casing (4) is made of styrene-ethylene/butadiene-styrene.
